# FASCICULE DE BREVET EUROPEEN

(11) **EP 2 113 756 B1**
(45) Date de publication et mention de la délivrance du brevet: **31.07.2013**
(21) Numéro de dépôt: 09305254.6
(22) Date de dépôt: 24.03.2009
(51) Int. Cl.: G01J 5/02, G01J 5/20

(54) **Détecteur thermique à haute isolation**
Hochisolierter Wärmedetektor
High-insulation heat detector

(30) Priorité: 29.04.2008 FR 0852864
(43) Date de publication de la demande: 04.11.2009
(73) Titulaire: ULIS, 38113 Veurey Voroize (FR)
(72) Inventeur: Vilain, Michel, 38450, ST GEORGES DE COMMIERS (FR)
(74) Mandataire: Vuillermoz, Bruno

(56) Documents cités:
- FR-A- 2 788 885
- FR-A- 2 827 707
- FR-A- 2 885 408
- US-A- 5 777 328
- US-B1- 6 552 344

## Description

### DOMAINE DE L'INVENTION

La présente invention a trait au domaine de la détection de rayonnements électromagnétiques, et plus précisément de l'imagerie et de la pyrométrie thermique. Plus particulièrement, la présente invention concerne un dispositif pour la détection d'un rayonnement infrarouge, comportant une matrice de détecteurs thermiques élémentaires.

### ETAT ANTERIEUR DE LA TECHNIQUE

Dans le domaine des détecteurs mis en oeuvre pour l'imagerie ou la thermographie (pyrométrie) infrarouge, il est connu d'utiliser des dispositifs agencés sous forme matricielle, susceptibles de fonctionner à température ambiante, c'est-à-dire ne nécessitant pas de refroidissement à de très basses températures, contrairement aux dispositifs de détection appelés "détecteurs quantiques" qui eux, nécessitent un fonctionnement à très basse température. De manière générique, les détecteurs non refroidis sont qualifiés de « thermiques ».

Ces détecteurs utilisent traditionnellement la variation d'une grandeur physique d'un matériau ou assemblage de matériaux approprié(s), en fonction de la température, au voisinage de 300K. Dans le cas particulier des détecteurs bolométriques, les plus couramment utilisés, cette grandeur physique est la résistivité électrique, mais d'autres grandeurs peuvent être exploitées, telle la constante diélectrique, la polarisation, la dilatation thermique, l'indice de réfraction, etc.

Un tel détecteur non refroidi associe généralement :
- des moyens d'absorption du rayonnement thermique et de conversion de celui-ci en chaleur ;
- des moyens d'isolation thermique du détecteur, de telle sorte à permettre à celui-ci de s'échauffer sous l'action du rayonnement thermique ;
- des moyens de thermométrie qui, dans le cadre d'un détecteur bolométrique, mettent en oeuvre un élément résistif dont la résistance varie avec la température ;
- et des moyens de lecture des signaux électriques fournis par les moyens de thermométrie. Les détecteurs destinés à l'imagerie thermique, ou infrarouge, sont classiquement réalisés sous la forme d'une matrice de détecteurs élémentaires formant des points d'image, selon une ou deux dimensions, lesdits détecteurs étant suspendus au dessus d'un substrat, généralement réalisé en silicium, via des bras de soutien.

Il est usuellement ménagé dans le substrat des moyens d'adressage séquentiel des détecteurs élémentaires et des moyens d'excitation électrique et de pré-traitement des signaux électriques générés à partir de ces détecteurs élémentaires. Ce substrat et les moyens intégrés sont communément désignés par le terme « circuit de lecture ».

Pour obtenir une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

Un détecteur élémentaire est formé d'une membrane mince (de l'ordre de 0,1 à 0,5µm), maintenue en suspension fixe parallèle au substrat, à l'aide de structures de maintien isolantes thermiquement, usuellement appelées bras (« *legs »* pour les anglo-saxons»). Une partie au moins de ces structures joue aussi le rôle de lien électrique entre les contacts pratiqués en surface du circuit de lecture et les parties électriquement actives de la membrane. La membrane est constituée, en addition du matériau sensible, de matériaux mis en oeuvre de telle manière à absorber au mieux le rayonnement thermique à détecter, par exemple à l'aide d'une couche conductrice présentant une résistance de couche adaptée, habituellement en conjonction avec un réflecteur disposé en surface du substrat. Ce réflecteur est destiné à renforcer l'absorption au voisinage d'une longueur d'onde donnée, ordinairement entre 8 et 14µm, par l'effet de lame quart d'onde. L'espace entre la membrane et le réflecteur est en conséquence ajusté vers 2 à 2,5µm. Ces constructions sont bien connues de l'homme du métier.

La performance essentielle d'un tel détecteur est sa résolution thermique ou NEDT (pour l'expression anglo-saxonne *« Noise Equivalent Differential Temperature* »). Cette grandeur est déterminée au premier ordre par la résistance thermique Rₜₕ, vue entre la membrane et le substrat, lequel est maintenu à température essentiellement constante.

Cette grandeur Rₜₕ est définie essentiellement par les matériaux constitutifs et la géométrie des bras de soutien. Ces bras sont solidaires du corps de membrane à l'une de leurs extrémités, et solidaires du substrat à l'autre extrémité par le biais d'une structure d'ancrage. La grandeur Rₜₕ est au premier ordre proportionnelle à la longueur, et inversement proportionnelle à la largeur et à l'épaisseur des bras (en admettant pour simplifier qu'ils soient constitués d'un unique matériau). Il convient donc de privilégier les matériaux constitutifs des bras parmi ceux qui présentent à la fois une résistivité thermique et une rigidité élevées. Le nitrure de silicium est bien adapté de ce point de vue, et donc très généralement mis en oeuvre, en plus d'une couche électriquement conductrice très fine (quelques nanomètres) nécessairement intégrée à au moins deux bras par détecteur élémentaire, de manière à assurer la continuité électrique entre au moins deux points de connexion formés en surface du circuit de lecture et les structures électriquement actives de la membrane du détecteur élémentaire.

Le principal problème pour obtenir la meilleure performance est de définir une résistance thermique maximale, tout en assurant une stabilité géométrique satisfaisante de la membrane sensible suspendue. En effet, amincir et réduire la largeur des bras, tout comme en augmenter la longueur, conduit rapidement à une limite au-delà de laquelle la rigidité devient insuffisante. Autrement dit, les déformations élastiques deviennent excessives pour maintenir avec précision la membrane au dessus du substrat, compte tenu que la lame quart d'onde doit être essentiellement uniforme en épaisseur pour obtenir une réponse spectrale uniforme et constante d'un détecteur à l'autre.

La solution habituelle est de privilégier le paramètre longueur, en développant la longueur des bras, entre leur point d'ancrage et leur point de jonction à la membrane, le long d'une, ou deux arêtes adjacentes de la membrane, voire davantage. Cette conformation contournée impose nécessairement l'usage de matériaux relativement épais dans le domaine (plusieurs centaines de nanomètres) pour une largeur au moins du même ordre, pour soutenir efficacement une membrane typique de 25µm d'arête. Il en résulte une limitation intrinsèque du concept en termes de Rₜₕ pratiquement réalisable du fait de la perte de rigidité qui en résulte.

Par ailleurs, cette disposition limite le facteur de remplissage de la structure, lequel exprime l'efficacité de captation de l'énergie radiative à détecter. En effet, les bras ainsi développés inactivent, au moins partiellement car ce n'est pas leur objet premier, une partie de l'emprise surfacique du détecteur élémentaire, cette inactivation étant proportionnellement d'autant plus élevée par rapport à la surface totale, qu'ils sont prolongés.

Une solution à ce nouveau problème consiste à dédier un premier niveau de construction au développement des bras, typiquement sous forme de serpentin selon des allers-retours parallèles à une arête, comme l'enseignent par exemple les documents US 6,034,374, US 6,094,127 ou US 6,144,030. La membrane absorbante et sensible est quant à elle formée à un second niveau superposé de construction, en connexion avec l'extrémité des bras sous-jacents opposée aux points d'ancrage au substrat. Il en résulte la formation de résistances thermiques élevées, mais il reste néanmoins impossible d'amincir les bras en épaisseur et largeur à volonté, pour les raisons mécaniques déjà évoquées, et dans ce cas exacerbées. Par ailleurs, la présence des bras entre le substrat et la membrane perturbant l'effet quart d'onde résonant, il est alors nécessaire de compliquer gravement la structure en produisant :
- soit des bras pourvus d'un pouvoir réfléchissant élevé de manière à produire l'effet réflecteur sur les bras eux-mêmes. Cet effet ne peut être qu'imparfait, et il en résulte un accroissement de conductance thermique des bras, contraire au but recherché ;
- soit en intercalant un réflecteur, soutenu par des points d'ancrage propres, et pourvu de perforations, là encore, contraires au but recherché, selon un troisième niveau intermédiaire de construction disposé entre les bras et la membrane. Une construction de ce type est décrite par exemple dans le document US 2002/0179837A1.

Ces constructions très complexes conduisent à des objets chers à fabriquer, en raison d'une part du nombre très élevé d'étapes technologiques à assembler, et des rendements nécessairement limités associés, et d'autre part, des dispersions technologiques induites par la multiplication des procédés mis enjeu.

Une solution nettement moins contraignante de ce point de vue, consiste à ne construire que des bras linéaires, maintenus à l'une de leurs extrémités par les structures d'ancrage destinées à la jonction mécanique au substrat, l'autre extrémité étant solidaire du corps de membrane, et d'assembler ces bras selon des paires colinéaires.

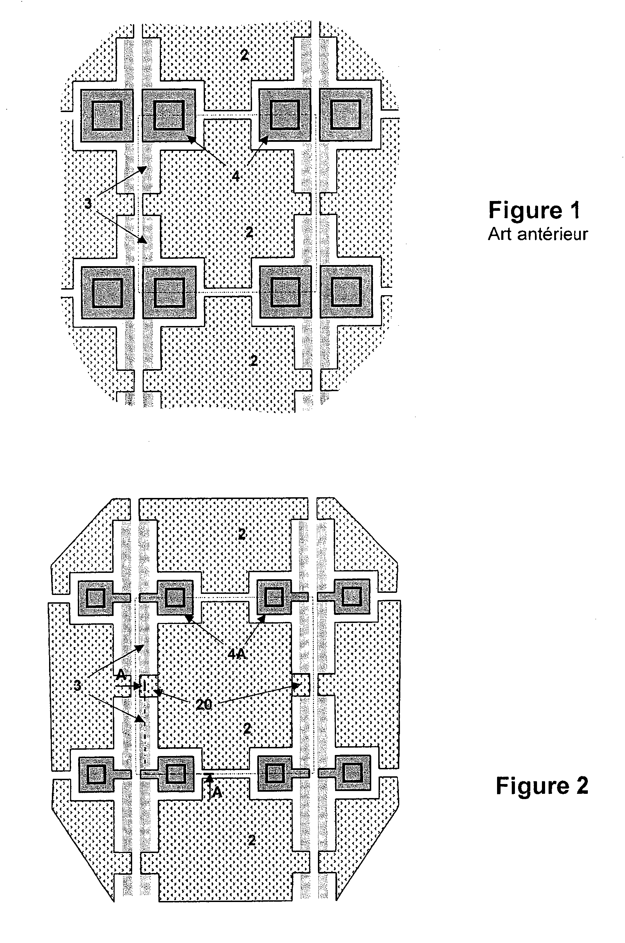

La figure 1 propose un cas typique de ce type de construction selon l'art antérieur. Il est entendu qu'au moins deux bras doivent être conducteurs électriques, en continuité avec les connexions formées en surface du circuit de lecture, de manière à adresser la résistance formée dans la membrane. Une structure de ce type à deux bras seulement est par exemple décrite dans le brevet US 5,021,663. Le maintien mécanique des membranes est alors valide même pour des épaisseurs de bras beaucoup plus faibles (de l'ordre de 15 à 50nm, pour les matériaux habituels et des pixels de l'ordre de 25µm d'arête) sans qu'il soit nécessaire de compliquer la structure, ni d'affaiblir sensiblement le facteur de remplissage. Ce dernier reste ainsi élevé, car les bras (ou paires de bras disposées selon un axe commun) ne dépassent pas la longueur d'une arête ou une diagonale de la membrane.

Il est alors possible d'obtenir des valeurs de Rₜₕ très élevées, avec un facteur de remplissage de bonne qualité, sans recourir à une construction compliquée. Cependant, pour les petits pas de juxtaposition des détecteurs élémentaires mis en oeuvre pour la formation de matrices, en dessous de 25µm typiquement, apparaissent de nouveau des limitations de cet art antérieur. D'une part, du fait que les points d'ancrage au substrat sont nécessairement relativement massifs, et disposés essentiellement dans l'axe des bras pour des raisons mécaniques, leur encombrement limite la longueur linéaire des bras. Par ailleurs, les points d'ancrage sont ordinairement formés avec une extension latérale (dans les deux dimensions parallèles au plan du substrat) qui devient non négligeable à ces très petits pas, relativement à la surface disponible sur l'emprise d'un pixel élémentaire. Il en résulte une perte de facteur de remplissage de la membrane.

D'autres exemples de l'état de la technique sont fournis par les documents FR 2 885 408, FR 2 788 885, US 5 777 328, US 6 552 344, FR 2 827 707 et US 2003168598.

Une estimation des contraintes de construction est abordée en relation avec les figures 1 et 2. Dans le cas le plus répandu de détecteurs matricés au pas de 25µm, en retenant le cas pratique favorable où les structures d'ancrage sont chacune communes à deux détecteurs adjacents, comme représenté sur la figure 1, et en considérant qu'une structure d'ancrage 4 occupe environ 5x5µm, quelques 15 à 17µm d'extension totale peuvent être conférés aux paires de bras 3, en admettant qu'un espace de 3 à 5µm doit être dévolu à la solidarisation de la membrane avec chaque paire de bras. Il en résulte la formation d'une résistance thermique satisfaisante en comparaison avec les autres possibilités de construction évoquées précédemment, alors même que chaque membrane selon la figure 1 est soutenue par quatre bras, plutôt que deux selon une autre forme de l'art antérieur, par exemple selon le document US 5,021,663.

En portant cet exercice à un pas de répétition matriciel de 17µm, l'extension totale des paires de bras ne saurait dépasser 9 à 11µm, alors que largeur et épaisseur sont peu réductibles, car imposées par d'autres contraintes technologiques. Par ailleurs, la surface utile pour développer la membrane captatrice d'énergie radiative, relativement à l'aire du détecteur élémentaire, est réduite de quelques 10 à 15%, ce qui s'avère pénalisant puisque l'on cherche toujours la performance maximale. Le bilan en termes de sensibilité se trouve réduit de 40 à 50%. Or, l'énergie radiative incidente sur l'aire d'un détecteur élémentaire est déjà réduite de plus d'un facteur 2 entre deux détecteurs respectivement aux pas de 25 et 17µm, il résulte de ces constats que la recherche de sensibilité pour les très petits pas de matriçage devient un problème sévère.

Il apparaît donc un besoin crucial de gain de performance pour les petits pas de matriçage, de préférence sans complexifier la structure.

Cette limitation géométrique des structures d'ancrage est liée d'une part à la nécessité de réaliser, de manière fiable et statistiquement certaine, la connectivité électrique entre les potentiels contrôlés par le circuit de lecture et les fonctions électriques de la membrane via les bras de soutien, et d'autre part, d'assurer la rigidité mécanique de l'ensemble par rapport au substrat. L'élaboration des structures d'ancrage requiert la mise en oeuvre de plusieurs matériaux, dont chacun doit être défini avec un procédé de lithographie et gravure particulier, répondant à des règles de dessin que l'on ne peut réduire à volonté. Ainsi, un encombrement final de l'ordre de 5x5µm de manière confortable, et 4x4µm moyennant des techniques et contrôles plus aigus, représente un bon compromis de réalisation avec les techniques éprouvées ordinaires du métier.

L'invention a donc pour but de proposer des détecteurs thermiques de construction simple, mais qui montrent des performances supérieures par rapport à celles de l'état de l'art, quel que soit le pas de matriçage, et tout particulièrement aux petits pas de répétition matricielle. L'invention résout le problème de repousser les limites de réalisation de résistances thermiques élevées, non seulement au niveau des structures d'ancrage au substrat selon une première forme d'application, mais aussi, et de manière éventuellement cumulative, au niveau du raccordement solidaire des bras sur la membrane sensible, selon une seconde forme d'application. Le concept peut être étendu selon une troisième forme d'application, qui procure une amélioration de sensibilité encore plus poussée.

### EXPOSE DE L'INVENTION

A cet effet, l'invention a pour objet une disposition et construction particulières des points d'ancrage au substrat des bras d'isolement thermique, ou / et des points de jonction des bras au corps de membrane, l'ensemble étant formé selon un seul niveau de construction, de telle manière à repousser les limitations géométriques de l'art antérieur, tout en en maintenant tous les avantages de simplicité d'élaboration.

Ainsi, l'invention vise un dispositif pour la détection d'un rayonnement électromagnétique tel que décrit dans la revendication 1.

On relèvera qu'en raison du mode caractéristique de solidarisation des bras de l'invention, l'encombrement des points d'ancrage constitués de la traverse et du pilier est réduit par rapport aux dispositifs de l'art antérieur.

Selon un second mode de réalisation de l'invention, lesdits bras, dénommés ci-après premiers bras, sont indirectement solidarisés à la membrane au moyen de bras colinéaires intermédiaires parallèles auxdits premiers bras, et dont l'une des extrémités est solidarisée à la membrane au niveau d'une traverse solidaire de ladite membrane et essentiellement coplanaire au bras et à ladite membrane, l'autre extrémité desdits bras intermédiaires étant solidaire des premiers bras au niveau d'un élément de jonction mécanique.

Selon ce second mode, lesdites traverses d'une même membrane sont solidarisées entre elles au moyen d'un élément rigide, solidaire et coplanaire de la membrane, voire avantageusement constitutif de cette dernière. Dans ce dernier cas, la membrane doit présenter en elle-même une rigidité apte à éviter le mouvement élastique relatif des parties formant traverses, qui aurait pour effet le relâchement des bras intermédiaires, et en conséquence un défaut de maintien de la membrane.

Selon une variante de la précédente forme de réalisation, lesdites traverses ne sont pas solidarisées entre elles directement sur la membrane, mais par l'intermédiaire d'un élément rigide longiligne parallèle aux bras, et raccordées à la membrane au moyen d'un troisième jeu de deux bras colinéaires, parallèles aux précédents, dont l'une des extrémités est solidarisée aux dites traverses et dont l'autre extrémité est solidaire de ladite membrane au niveau d'un élément de jonction mécanique.

Avantageusement, ces différents éléments sont coplanaires ou sensiblement coplanaires.

Selon l'invention, la traverse, qu'il s'agisse de celle solidarisée au pilier ou de celle associée directement ou indirectement à la membrane, est formée d'au moins une couche d'un matériau rigide, en contact solidaire avec les couches constitutives des bras, et des couches constitutives de la membrane. Cette précision complète l'expression « essentiellement coplanaire » qui signifie que toutes ces couches sont déposées les unes sur les autres sans intermédiaire sacrificiel, de manière transitivement adhérentes entre elles. Cette traverse présente une forme allongée, orthogonale à l'axe, c'est-à-dire à la longueur des bras, disposée essentiellement dans le même plan parallèle au substrat, plan qui contient aussi les bras et la membrane. Cette disposition où tous ces éléments sont coplanaires, selon les précisions fournies sur ce terme, est de nature à produire une construction très simple de l'ensemble.

Cette traverse présente avantageusement, au moins à l'extrémité en liaison avec l'extrémité du bras, une largeur négligeable devant la longueur du bras. Typiquement et avantageusement, on lui donnera une largeur, au moins à l'extrémité en jonction avec le bras, de l'ordre de celle du bras.

Le pilier impliqué selon le premier mode de mise en oeuvre forme une structure essentiellement verticale (perpendiculaire à la surface du substrat) solidaire du substrat à sa partie inférieure, et solidaire de la traverse à sa partie supérieure.

Il convient de préciser, quoique cela soit connu, qu'une membrane est soutenue par au moins deux bras conducteurs, lesquels doivent être en continuité électrique avec la traverse qui leur est solidaire, laquelle comportera donc aussi au moins une couche conductrice. Toutes les traverses ne sont cependant pas nécessairement pourvues de cette couche conductrice.

Ladite traverse à continuité électrique doit être en continuité électrique avec un pilier lui-même conducteur, de manière à assurer globalement la continuité électrique entre les contacts disposés en surface du substrat et les fonctions électriques disposées dans la membrane. Tous les piliers ne sont cependant pas non plus nécessairement conducteurs.

De même, selon le second mode de mise en oeuvre, au moins deux bras conducteurs sont solidaires de traverses comportant au moins une couche conductrice en continuité avec les structures actives de la membrane.

Il demeure que tous les bras, toutes les traverses, et tous les piliers relatifs à une même membrane ne seront pas nécessairement conducteurs. L'homme du métier saura aisément définir quelles structures seront pourvues de constituants conducteurs ou non, selon la continuité électrique qu'il entend établir pour obtenir la fonctionnalité du détecteur selon l'invention, sans qu'il soit besoin de développer ce point plus en détail.

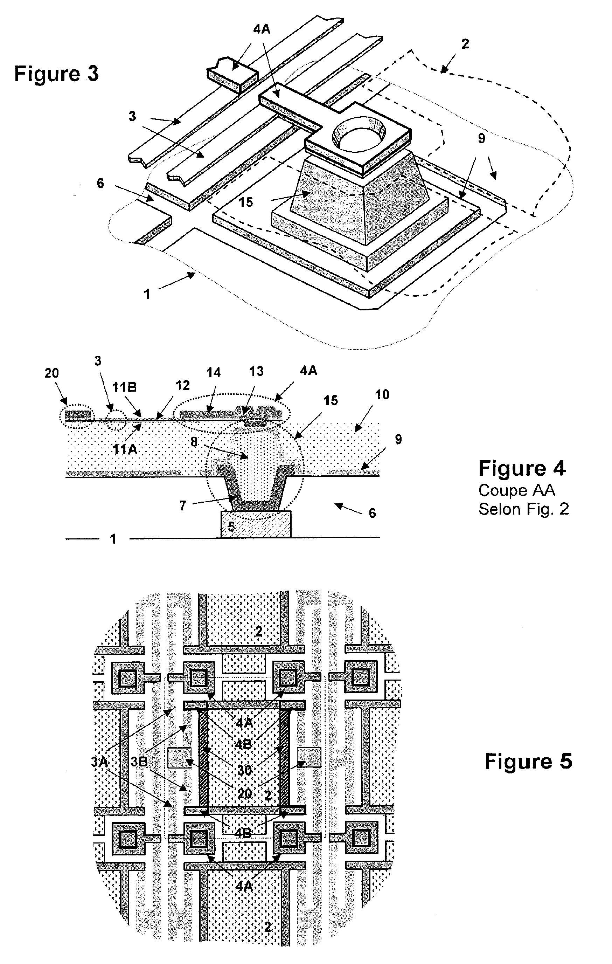

La traverse et les piliers selon le premier mode de réalisation sont essentiellement isothermes au substrat. En d'autres termes, les différences de température observables au sein même de la structure d'ancrage, constituée de la traverse et du pilier par rapport au substrat, sont négligeables devant les différences qui apparaissent sur la longueur des bras lorsque le détecteur est en fonctionnement. Ce caractère est favorable pour éviter les interférences thermiques entre détecteurs voisins dans certaines formes particulières de mise en oeuvre de l'invention, par exemple selon les figures 2 et 5, mais non essentiel ni préférentiel à l'invention.

De même, chacune des traverses intégrées dans des parties suspendues selon les modes de réalisation secondaires, est essentiellement isotherme selon la même acception du terme. En d'autres termes, de par leur construction, il n'apparait pas de différentiel notable de température entre leurs différentes parties, en particulier d'une extrémité à l'autre, lorsque le détecteur est en fonctionnement. Cette caractéristique permet de les distinguer des formations constitutives des bras d'isolement thermique.

Le terme « rigide » appliqué à la traverse signifie dans le contexte de la présente invention la mise en oeuvre d'au moins une couche, absente des bras, lesquels sont par opposition considérés comme non rigides, puisqu'il a été indiqué précédemment qu'il est avantageux dans le but recherché de performance élevée de retenir pour leur construction des épaisseurs et largeurs particulièrement faibles. Cette couche ou ensemble de couches formant l'essentiel de la traverse est non susceptible de se déformer sensiblement lors du fonctionnement ordinaire du détecteur, ce qui ne serait typiquement pas le cas des bras s'ils étaient localement prolongés, en l'absence de ladite traverse, selon les mêmes dimensions horizontales que celle-ci. L'épaisseur de la traverse est donc typiquement substantiellement plus élevée que celle des bras, et préférentiellement formée de matériaux mécaniquement rigides.

Avantageusement, les matériaux constitutifs des bras se prolongent sur l'emprise de ladite traverse, jusqu'au sommet dudit pilier, ou jusqu'à l'intérieur de la membrane, selon le mode de mise en oeuvre, de manière à procurer une connectivité électrique aisée à réaliser lorsqu'elle est nécessaire, et de manière à former une solidarité mécanique adéquate entre l'extrémité des bras et les structures qui les maintiennent linéairement tendus.

### BREVE DESCRIPTION DES FIGURES

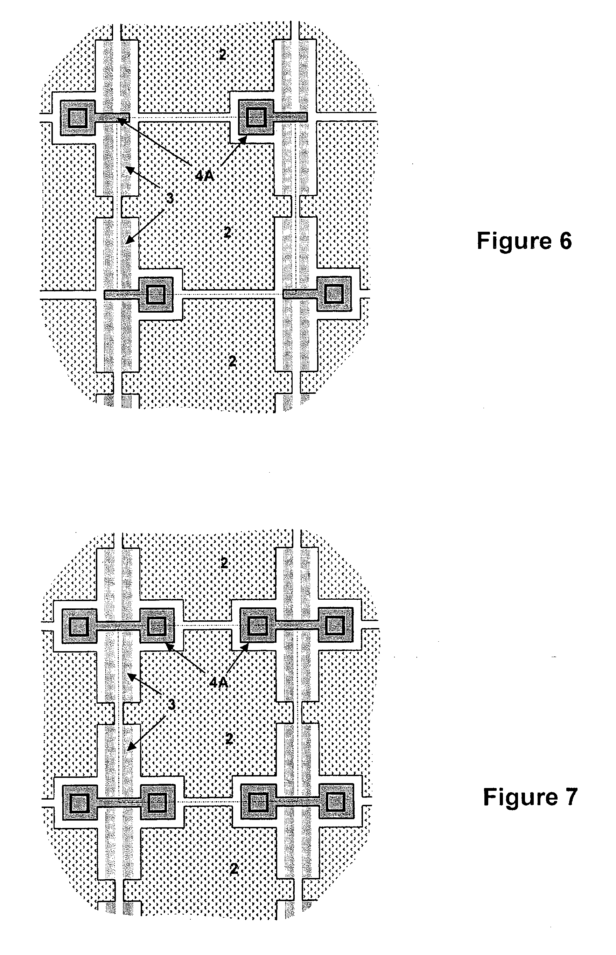

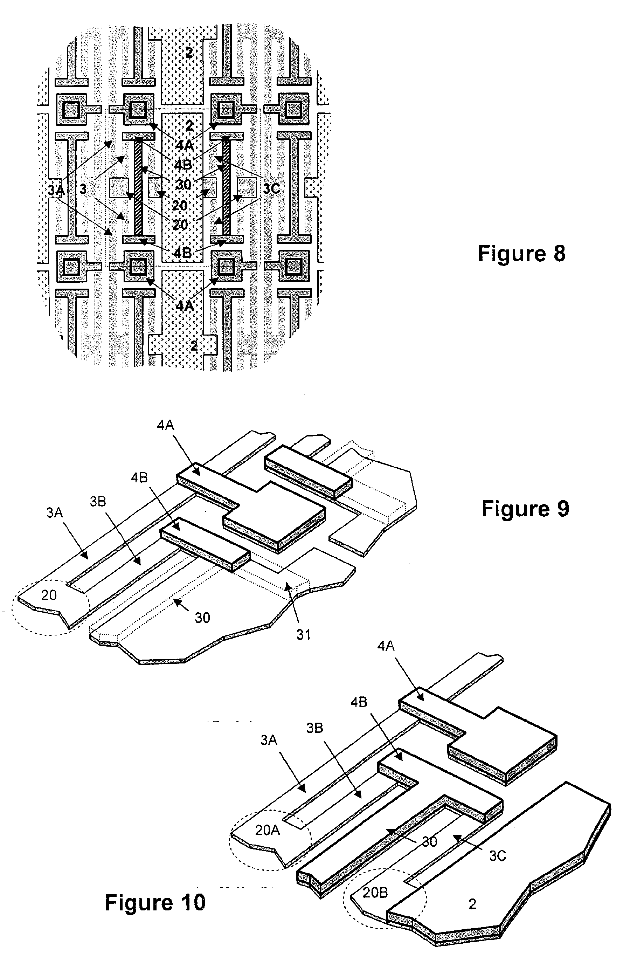

L'invention sera bien comprise à la lecture de la description qui suit, dont les détails sont donnés uniquement à titre d'exemple, et produite en relation avec les figures annexées, dans lesquelles des références identiques se rapportent à des éléments identiques :
■ La figure 1 est une vue en plan d'une partie d'un assemblage matriciel de détecteurs élémentaires selon l'état antérieur de la technique ;
■ La figure 2 est une vue en plan d'une partie d'un assemblage matriciel de détecteurs élémentaires selon un premier mode particulier de mise en oeuvre de l'invention ;
■ la figure 3 est une vue schématique en perspective focalisée sur les éléments caractéristiques du détecteur selon le mode de réalisation de la figure 2 ;
■ la figure 4 est une coupe sagittale détaillée de l'objet de l'invention selon un mode de réalisation particulier et préférentiel, et selon le parcours AA défini sur la figure 2.
■ La figure 5 est une vue en plan d'une partie d'un assemblage matriciel de détecteurs élémentaires selon un second mode particulier de mise en oeuvre de l'invention.
■ La figure 6 est une vue en plan d'une partie d'un assemblage matriciel de détecteurs élémentaires selon une première variante du premier mode de mise en oeuvre de l'invention.
■ La figure 7 est une vue en plan d'une partie d'un assemblage matriciel de détecteurs élémentaires selon une seconde variante du premier mode de mise en oeuvre de l'invention.
■ La figure 8 est une vue en plan d'une partie d'un assemblage matriciel de détecteurs élémentaires selon une variante du second mode de mise en oeuvre de l'invention.
■ La figure 9 est une vue schématique en perspective focalisée sur les éléments caractéristiques du détecteur selon le mode de réalisation de la figure 5.
■ La figure 10 est une vue schématique en perspective focalisée sur les éléments caractéristiques du détecteur selon le mode de réalisation de la figure 8.

### DESCRIPTION DETAILLEE DE L'INVENTION

On a illustré schématiquement sur la figure 1 une vue partielle en plan d'une matrice de détecteurs selon l'état antérieur de la technique. On peut observer :
■ un substrat initial **1** à partir duquel est formé collectivement l'ensemble des structures ;
■ une juxtaposition de membranes sensibles au rayonnement thermique **2,** maintenues chacune en suspension au dessus du substrat **1,** au niveau de la partie centrale de leurs arêtes gauche et droite ;
■ des paires de bras de soutien **3** de conformation colinéaire ;
■ des structures d'ancrage **4,** dans ce cas particulier chacune commune à deux pixels adjacents. Les carrés inscrits à l'intérieur de ces structures représentent le pilier de connexion au substrat, qui se développe dans la dimension verticale.

La figure 2 représente une vue partielle en plan d'une matrice de détecteurs selon un premier mode de mise en oeuvre de l'invention, qui comprend les mêmes éléments, mais est caractérisé par la constitution et forme des structures d'ancrage au substrat. Ces structures sont constituées des traverses **4A** sur lesquelles sont solidarisées les extrémités des paires de bras **3** opposées à la membrane **2,** et des piliers de connexion au substrat indiqués par les carrés internes.

L'élément **20** de jonction mécanique qui solidarise entre elles les extrémités des bras opposées aux points d'ancrage est constitué ici, selon un cas particulier simple, d'une excroissance latérale de la membrane **2,** sur laquelle s'attachent les bras. Pour cette raison de continuité des matériaux, ces éléments ne sont pas représentés séparément de la membrane pour les pixels de la figure 2 qui entourent le pixel central, en tous points identiques à ce dernier. Les matériaux mis en oeuvre dans la membrane, qui dans ce cas définissent la constitution des éléments **20** de jonction colinéaire des bras, doivent être solidarisés aux matériaux des bras, de manière à assurer la stabilité générale de la structure. Cette solidarité est avantageusement obtenue par le prolongement d'au moins une partie des matériaux constituant les bras sur cette zone de jonction, comme représenté sur la figure 4, Cette figure 4 suppose pour simplifier, mais ce n'est nullement un trait caractéristique de l'invention, l'usage du même matériau **14** dans la formation de la traverse **4A** et de l'élément de jonction **20** des bras. Le détail de la formation des couches dans la membrane sort du champ de ce document.

Il est entendu que le choix de ne représenter sur les figures 2 et 5 que des structures d'ancrage communes à deux pixels adjacents ne représente qu'un cas possible parmi d'autres, suffisant au développement explicatif de l'invention. Il est tout-à-fait possible de supporter chaque membrane à l'aide de deux ou quatre ancrages individualisés, voire plus, ou au contraire de partager tout ou partie des ancrages entre quatre pixels adjacents, sans sortir du cadre de l'invention.

La figure 6 propose une première variante de mise en oeuvre de l'invention selon ce premier mode de réalisation, selon laquelle au moins une traverse par pixel (par membrane) est commune à quatre pixels. La figure 6 représente le cas ou les membranes sont toutes soutenues par quatre traverses, chacune commune à quatre pixels. L'invention permet ainsi d'éliminer, dans l'emprise d'un pixel, l'encombrement d'une partie des ancrages. Cette disposition n'est fonctionnelle en termes d'adressage individuel des pixels, dans le cas représenté sur la figure 6, que si des interrupteurs particuliers de sélection des pixels en lecture sont formés dans le substrat, selon une disposition connue.

La figure 7 propose une seconde variante de mise en oeuvre de l'invention selon ce premier mode de réalisation, selon laquelle au moins une traverse par pixel est solidaire de deux piliers disposés à ses extrémités. La figure 7 représente le cas où toutes les membranes sont soutenues par quatre traverses constituées chacune selon cette forme particulière. Cette disposition permet soit de renforcer la rigidité de la traverse, soit d'obtenir une connectivité électrique ou mécanique redondante, soit de modifier la thermalisation des points d'ancrage des bras au substrat, de manière non exclusive. Par ailleurs, la continuité électrique entre l'une des deux paires colinéaires de bras solidaires de la traverse et l'autre, c'est-à-dire la continuité électrique entre les deux extrémités de la traverse, peut être instaurée ou au contraire évitée par le traitement réservé aux couches conductrices constitutives de la traverse.

A partir de ces cas d'exemple, il est possible d'inférer d'autres dispositions particulières avantageuses selon l'invention sans qu'il soit besoin de les enseigner explicitement toutes.

La construction de la membrane n'a pas besoin d'être décrite ici dans le détail, l'homme du métier disposant de tous les éléments nécessaires. Cependant, il va être décrit ci-après les éléments essentiels pertinents dans le cadre de la construction selon l'invention.

Typiquement, on associe au moins une couche dite sensible, ou thermométrique, de matériau dont la résistivité varie avec la température, par exemple du silicium amorphe dopé ou un alliage d'oxydes de vanadium, et au moins une couche, par exemple de titane ou de nitrure de titane, définissant les électrodes conductrices de la résistance bolométrique ainsi formée. L'absorption du rayonnement thermique est obtenue soit à l'aide d'une ou plusieurs couches de matériau absorbant dans le gamme de longueurs d'onde désirée, par exemple du nitrure de silicium, ou en profitant directement des propriétés de conduction des électrodes si elles présentent une résistance de couche adaptée au couplage des ondes électromagnétiques. Ces principes sont largement décrits dans la littérature du domaine.

Les bras 3 sont réalisés typiquement à l'aide d'une ou plusieurs couches diélectriques (non conductrices de l'électricité) à finalité mécanique, typiquement du nitrure ou oxyde de silicium, ou matériau intermédiaire. Au moins deux bras comprennent aussi une couche conductrice destinée à la continuité électrique de la structure, comme précédemment indiqué.

La figure 3 illustre le détail de la structure selon l'invention, qui comprend en particulier :
■ une portion des bras **3** au voisinage de leurs points d'ancrage, lesquels sont dans ce cas particulier préférentiel, chacun commun à deux détecteurs adjacents ;
■ les points d'ancrage, constitués des traverses **4A** et des piliers **15 ;**
■ le contour matérialisé en pointillés des membranes **2,** représentées en transparence pour la clarté du schéma.
   Les explications de construction selon un mode préférentiel non limitatif sont exposées maintenant en relation avec les figures 3 et 4.

Le processus commence par le dépôt d'une couche conductrice **7** en surface du substrat 1, lequel est traditionnellement passivé par l'ensemble de couches diélectriques **6** dans lesquelles sont pratiquées des ouvertures d'accès. Cette couche conductrice **7,** est conservée au voisinage immédiat des dites ouvertures, et éliminée ailleurs.

On poursuit par l'application d'une couche **8,** préférentiellement planarisante, quoique de manière non critique. A cet effet du polyimide, ou un dépôt de type minéral épais, sont adéquats. Cette couche est localement définie par des techniques adaptées bien connues selon des piliers, dont les dimensions latérales sont de l'ordre de 2 à 4 micromètres, et la hauteur finale, par rapport à la surface du substrat, de l'ordre de 1,5 à 2 micromètres.

On dépose ensuite une couche réfléchissante métallique **9** qui enrobe les piliers précédemment formés, et contactent la marge de la couche conductrice **7.** Les surfaces qui doivent être isolées entre elles, en particulier les accès électriques au circuit de lecture sont définies par gravure habituelle.

Une couche **10** de matériau planarisant sacrificiel, au sens où il est destiné à disparaitre au terme du processus, de l'ordre de 1,5 à 2,5 micromètres d'épaisseur, est appliquée sur la structure par centrifugation ou *« spin coating* » typiquement. On met en oeuvre une couche organique de polyimide par exemple. On dépose ensuite en surface de cette couche sacrificielle une très fine couche diélectrique **11A,** d'oxyde ou de nitrure de silicium ou en matériau intermédiaire, avec une épaisseur de l'ordre de 10 à 50 nanomètres, puis une couche métallique **12** destinée à produire la continuité électrique des bras, et éventuellement d'autres fonctions électriques dans la membrane.

On procède ensuite à la définition par les moyens usuels de cette couche conductrice de manière à en définir les limites locales selon les fonctions à obtenir, qui n'ont pas besoin d'être décrites ici. On pratique ensuite des ouvertures à travers les couches **11A, 12** et la surépaisseur résiduelle de la couche **10** au droit des piliers. Ces ouvertures avantageusement réduites à 1 micromètre de dimension latérale, voire moins, sont alors métallisées par la couche **13,** laquelle est ensuite éliminée partout sauf au voisinage immédiat des ouvertures. La formation de la continuité électrique depuis le substrat est obtenue de la sorte jusque vers la couche **12,** donc jusque dans la membrane.

Une seconde couche diélectrique **11B** est optionnellement, mais préférentiellement déposée, typiquement identique en nature et en épaisseur à la couche **11A.** Cette couche est ensuite éliminée sur les surfaces destinées à la mise en contact des électrodes et du (ou des) matériau(x) sensible(s), non représenté, lequel est finalement déposé en surface de la structure, selon ses caractéristiques et épaisseurs propres, qui sortent de ce cadre explicatif.

La continuité mécanique rigide en extension des éléments de jonction des bras entre eux, est naturellement obtenue si on préserve la continuité d'au moins une couche, et préférentiellement toutes les couches constitutives des bras, au moins sur l'emprise des extensions latérales de la membrane constitutives de ces éléments de jonction, selon la construction proposée sur la figure 2.

Le matériau sensible est enfin défini par les méthodes adaptées, en particulier de manière à l'ôter des surfaces occupées par les bras, et éventuellement aussi en regard des structures **4A.** D'autres couches et définitions locales de matériaux propres à l'élaboration en particulier des fonctions de la membrane peuvent être ajoutées ou intercalées, de même, l'ordre de détail de certaines opérations, selon l'architecture projetée, peut varier sans qu'il apparaisse nécessaire ni utile d'en produire tous les détails de variantes, puisque ces éléments n'auraient pas à être compris comme caractéristiques de l'invention, dont l'esprit ressort de l'exposé tel qu'il a été donné.

La structure caractéristique dite traverse est alors finalisée par le dépôt d'une ou plusieurs couche(s) **14,** par exemple constituée de nitrure ou d'oxyde de silicium, ou matériau intermédiaire, ou de silicium amorphe, selon une épaisseur de l'ordre de 50 à 500 nanomètres. Le contour de la traverse, au moins à l'extrémité en liaison avec les bras, est obtenu par gravure selon une largeur typiquement de l'ordre de la largeur des bras, soit entre 0,3 et 1 micromètre selon la technique actuelle. L'ensemble **14** est préférentiellement conservé au dessus du matériau **13** en protection, voire en substitut de ce dernier, s'il est métallique.

La définition géométrique de la membrane et des bras est subséquemment obtenue à l'aide de l'opération suivante de gravure des divers matériaux, à savoir au moins **11B, 12, 11A** constitutifs de ces structures, jusqu'à déboucher dans la couche sacrificielle sous-jacente. Il ne reste qu'à éliminer par les moyens habituels la couche sacrificielle **10** pour achever le processus de construction.

La formation de la traverse et du pilier qui la supporte, selon cette description, ne consomme qu'une surface de l'ordre de 2 micromètres de côté au droit du pilier, et de l'ordre de 0,3 à 0,5µm de largeur à l'extrémité de la traverse sur laquelle s'appuie(nt) le(s) bra(s), c'est-à-dire nettement moins encombrante que les structures d'ancrage selon les dispositifs de l'art antérieur. Il en résulte que l'extension de la membrane captatrice d'énergie radiative peut être mesurablement améliorée par rapport à l'art antérieur. On verra aussi que ce gain de place exacerbe l'intérêt de l'invention selon le second mode de réalisation décrit plus loin en relation avec la figure 5.

La technique détaillée précédemment pour obtenir le pilier et la traverse associée ne constitue qu'un exemple efficace de réalisation. Il est possible de recourir à des techniques plus habituelles du domaine, consistant à ne pas former au préalable le pilier, mais au contraire à former les ouvertures à travers les couches constitutives des bras **11A** et **12,** puis à travers la couche **10** jusqu'à déboucher sur un matériau conducteur disposé en surface du substrat, ces ouvertures étant ensuite métallisées par exemple par la couche **13** ou l'ensemble de couches équivalent à la couche **13** de la présente description. Par ailleurs, il est possible de solidariser la traverse au sommet du pilier **15** dès le dépôt de la première couche minérale **11A,** à l'aide d'un amincissement préalable de la couche **10,** de manière à dégager le sommet des piliers **8.** Les procédés de gravure sèche capables de produire ce résultat sont bien connus de l'homme de métier.

L'assemblage préférentiel décrit conserve avantageusement les matériaux constitutifs des bras jusqu'au sommet des piliers, évitant ainsi la formation éventuelle de faiblesses mécaniques préjudiciables, et assurant la continuité électrique de manière aisée lorsqu'elle est requise, associée à une simplicité notoire d'élaboration de la traverse de soutien. Il est possible selon une variante, de former la traverse au moyen d'un ou plusieurs matériaux conducteurs, par exemple par l'extension de la couche métallique **13** selon typiquement la forme indiquée sur la figure 3. Il n'est alors plus besoin de conserver les matériaux du bras jusqu'au droit du pilier.

Une seconde variante avantageuse de construction est obtenue dans le cas où le matériau sensible bolométrique disposé dans la membrane, est susceptible de constituer efficacement la matière essentielle de la traverse. C'est typiquement le cas du silicium amorphe. Selon cette variante, le matériau **14** est mis en oeuvre simultanément dans la membrane en temps que matériau bolométrique sensible, et comme constituant principal de la traverse, ce qui simplifie sensiblement l'assemblage général de la structure complète.

Selon une troisième variante, le ou les matériaux **14** sont non seulement mis en oeuvre pour la constitution de la traverse, mais aussi dans la membrane en temps que matériau inerte de passivation ou de renfort mécanique des structures actives de la membrane.

Un second mode de mise en oeuvre de l'invention est maintenant décrit en relation avec la figure 5. Selon ce mode de réalisation, on intègre à la membrane des éléments de rigidification identifiés par la référence **4B.** En d'autres termes, on munit ladite membrane de traverses, sensiblement de même nature que celle **14** décrite en relation avec les figures 2 et 3. Il s'agit ici non plus de former à l'aide de traverses des points d'ancrage vers le substrat, mais des points de solidarisation mécanique, et si nécessaire de continuité électrique, sur la membrane **2.**

On reconnaît facilement la disposition et le rôle de ces éléments de rigidification ou traverses à partir de la figure 5, et leur constitution à partir d'une extrapolation de la figure 4, en relation avec les explications précédemment fournies. Les mêmes opérations, nature et dispositions relatives des diverses couches et matériaux constitutifs et variantes sont directement extensibles à ce second mode de réalisation.

La continuité mécanique entre les éléments de chaque paire de bras est obtenue dans l'exemple de la figure 5 par une surface pleine **20,** commune à deux paires de bras, disposée au point de raccordement des paires, et constituée des mêmes matériaux que ceux constituant les bras. Cette partie **20** n'est pour cette raison pas représentée de manière séparée de la membrane pour les pixels entourant le pixel central, en tous points identiques à ce dernier. Il est possible de préférer d'autres formes de détail, et un empilement particulier différent de matériaux, par exemple un élément additionnel formé à partir de la couche **14,** ou d'autres constituants mis en oeuvre en surface de la couche **10.**

Il est caractéristique selon ce second mode de réalisation, de former une rigidité mécanique entre les deux traverses de la même paire de bras. Cette rigidité est obtenue par exemple au moyen d'un cadre rectangulaire à périmètre ininterrompu, disposé aux marges de la membrane **2,** en prolongement direct des matériaux de l'ensemble **14** constituant les traverses **4B** formés selon le principe de la description précédemment indiquée.

Le dessin du cadre tel que représenté sur la figure 5, réalisé typiquement avec une largeur de l'ordre de 1 à 3 micromètres, ne constitue qu'un exemple préférentiel produisant le résultat recherché de maintien des paires de bras, même très fins, et qui produit aussi accessoirement, mais avantageusement, le résultat de rigidifier la membrane dans le sens de flexion autour de l'axe parallèle aux bras.

D'autres configurations selon l'invention selon ce second mode de mise en oeuvre peuvent être obtenues, par exemple en disposant non pas un cadre, mais un barreau **30** parallèle aux bras, constitué de l'ensemble **14** qui joint les deux traverses de la même paire de bras, correspondant aux arêtes parallèles aux bras du précédent cadre. A l'extrême, si la membrane non renforcée par l'ensemble **14** est par elle-même suffisamment peu flexible, les traverses peuvent être limitées aux seules portions telles que délimitées par les rectangles **4B** indiqués sur la figure 5. L'extension des traverses à leur extrémité en jonction avec la membrane doit alors être définie sur la base de considérations de solidarité mécanique rigide qui en résulte entre les deux traverses de la même paire de bras, qui dépendent des caractères propres de construction de la membrane.

La figure 9 précise ce point à partir de la construction proposée sur la figure 5, où les piliers et formations liées au substrat ne sont pas représentées par souci de simplification. Les traverses **4B** y sont représentées en traits pleins selon une extension suffisante si la membrane **2** est elle-même suffisamment rigide. Pour améliorer cette rigidité, le barreau **30** matérialisé en traits pointillés, essentiellement longiligne, est avantageusement ajouté en marge de la membrane. L'ensemble rigide peut aussi être complété par un cadre partiel ou complet **31** selon le complément, également matérialisé en traits pointillés. Si le corps de membrane est suffisamment rigide, la traverse peut être définie directement au moyen d'une formation issue des couches constitutives de celle-ci.

Un troisième mode de réalisation est illustré par la figure 8. Dans celui-ci, la membrane est soutenue par une première paire de bras colinéaires **3C,** joints à l'aide d'un élément mécanique **20B,** formé comme précédemment indiqué pour le premier mode de réalisation. Les éléments ou barreaux **30** introduits lors de l'exposé du second mode de réalisation sont séparés de la membrane pour former une structure rigide allongée, ou poutre **30,** solidarisant les paires de traverses. Le support de l'ensemble ainsi formé est obtenu au moyen de l'autre extrémité des traverses **4B,** sur lesquelles s'appuient les paires de bras **3B,** jointes aux paires **3A** à l'aide de l'élément **20A,** selon la formation qu'enseigne le second mode de réalisation.

Il est possible de poursuivre le développement alterné de paires de bras parallèles selon les modes de réalisation exposés au-delà ce ces exemples, jusqu'au coeur de la membrane. Cependant, d'une part la stabilité géométrique de l'ensemble présente une limite qui dépend de la maîtrise des qualités mécaniques des couches mises en oeuvre, et d'autre part il faut doter la membrane sensible d'une surface suffisante pour obtenir une réponse optique cohérente avec le but recherché d'optimisation de performance. Cette forme de mise en oeuvre selon la figure 8 représente de ce point de vue un point ultime avantageux.

On peut en déduire qu'une disposition particulièrement avantageuse est obtenue dans le cas où le matériau bolométrique sensible mis en oeuvre dans la membrane est aussi susceptible de former l'ensemble **14** constitutif essentiel des traverses **4B,** et des éléments de rigidification ou poutres **30,** par exemple du silicium amorphe, car il suffit de conformer ce matériau au voisinage des points de jonction des bras sur la membrane ou sur les poutres selon des traverses conformes à l'invention, de manière continue avec le corps de membrane, pour obtenir le détecteur à haut isolement thermique qui en résulte.

Une construction de ce type est représentée sur la figure 10, selon une configuration cohérente avec la figure 8. Dans ce cas particulier avantageux, les barreaux **30** et toutes les traverses **4B** et **4A,** c'est-à-dire y compris celles solidarisées aux piliers (non représentés pour simplifier, ainsi que les formations liées au substrat) sont formés à l'aide du même ensemble de matériaux **14,** lequel est aussi avantageusement disposé également dans la membrane, par exemple et typiquement s'il y constitue le matériau sensible. Les éléments de jonction **20A** et **20B** sont dans ce cas particulier de la figure 10, formés des seuls matériaux constitutifs des bras, d'autres options fonctionnelles étant possibles, ainsi que déjà indiqué.

La mise en oeuvre simultanée de l'invention selon les deux premiers modes de réalisation détaillés précédemment, ainsi que les modes dérivés par exemple selon la figure 8, est cumulable au niveau d'un même détecteur, sans difficulté puisque, ainsi qu'indiqué, les mêmes principes et techniques peuvent avantageusement être appliqués. La figure 5 est représentative d'un cas d'application simultanée des deux modes sur la même construction. On constate que l'invention autorise pratiquement le doublement de la longueur des bras par rapport au résultat obtenu selon le premier mode seul, exemplifié par la figure 2, voire le triplement selon l'exemple proposé en figure 8, lequel premier mode comme il a été dit, améliore déjà l'art antérieur de 40 à 50% pour des détecteurs matricés aux très petits pas de répétition. Ce résultat est en partie lié au mode de construction des structures d'ancrage au substrat selon la description fournie, particulièrement économe en surface.

L'invention rend donc possible la réalisation mécaniquement valide, de bras équivalents très longs, à savoir pratiquement deux fois, voire trois fois la dimension de l'arête de la membrane, quoique très minces et étroits. Le résultat en termes de résistance thermique obtenue est dans ce cas particulièrement élevé, et obtenu à l'aide d'une construction simple, car développée à partir d'un unique niveau de construction au dessus du substrat de départ. Il en résulte finalement un coût d'élaboration modéré par rapport à des assemblages nettement plus complexes, et des rendements de fabrication en pratique comparables à l'art antérieur.

La présente invention trouve application dans le domaine des capteurs d'image à détection bolométrique, quelle que soit la bande de fréquences de détection ou du type de matériau bolométrique utilisé pour fabriquer les bolomètres d'imagerie et de référence, comme par exemple du silicium amorphe (a-Si), de l'oxyde de vanadium (Vox), un métal.

## Revendications

1. Dispositif pour la détection d'un rayonnement électromagnétique, et notamment infrarouge, comprenant un substrat (1) et au moins une microstructure comprenant une membrane (2), sensible audit rayonnement, s'étendant sensiblement en regard et à distance dudit substrat, ladite membrane étant solidarisée mécaniquement à deux éléments de maintien, ou bras de soutien (3; 3A), longilignes, colinéaires, essentiellement coplanaires à ladite membrane (2), et agencés d'un même côté de la membrane (2), chacun des bras étant relié mécaniquement au substrat (1) par l'intermédiaire d'un pilier (15), solidaire du substrat (1), ladite membrane (2) étant en continuité électrique avec le substrat (1), *caractérisé :*
■ en ce que les deux bras colinéaires (3, 3A), dits « premiers bras », sont solidaires entre eux au niveau de leurs extrémités solidarisées à la membrane (2) au moyen d'un élément de jonction mécanique (20, 20A, 20B), essentiellement coplanaire aux bras (3 ; 3A) et à la membrane (2) ;
■ et en ce que l'autre extrémité de chacun des bras (1) étant solidaire d'une traverse rigide (4A) de forme allongée essentiellement coplanaire aux bras (3 ; 3A), et s'étendant sensiblement perpendiculairement à la dimension principale desdits bras (3 ; 3A), ladite traverse (4A) formant une saillie solidaire du pilier (15) auquel le bras est mécaniquement relié.

2. Dispositif pour la détection d'un rayonnement électromagnétique selon la revendication 1, ***caractérisé* en ce que** les premiers bras (3) sont directement solidarisés à la membrane (2), l'un au moins étant en outre en continuité électrique avec ladite membrane et avec la traverse (4A), elle-même en continuité électrique avec le pilier (15).

3. Dispositif pour la détection d'un rayonnement électromagnétique selon l'une des revendications 1 et 2, ***caractérisé* en ce qu'**une traverse rigide (4A) est commune à deux ou quatre membranes (2) adjacentes.

4. Dispositif pour la détection d'un rayonnement électromagnétique selon l'une des revendications 1 et 2, ***caractérisé* en ce qu'**une traverse rigide (4A) est solidaire de deux piliers (15) disposés à ses extrémités.

5. Dispositif pour la détection d'un rayonnement électromagnétique selon l'une des revendications 1 à 4, ***caractérisé* en ce que** la traverse (4A) est formée d'au moins une couche d'un matériau rigide, en contact solidaire avec les couches constitutives des bras.

6. Dispositif pour la détection d'un rayonnement électromagnétique selon l'une des revendications 1 à 5, ***caractérisé* en ce que** la traverse (4A) est en continuité électrique avec un pilier (15) lui-même conducteur, de manière à assurer globalement la continuité électrique entre les contacts disposés en surface du substrat et les fonctions électriques disposées dans la membrane.

7. Dispositif pour la détection d'un rayonnement électromagnétique selon la revendication 1, ***caractérisé* en ce que** lesdits premiers bras (3, 3A) sont indirectement solidarisés à la membrane (2) au moyen de bras colinéaires intermédiaires (3B), parallèles aux bras (3, 3A), et solidarisés au niveau de l'une de leurs extrémités à une traverse (4B) solidaire de la membrane et essentiellement coplanaire au bras et à ladite membrane, l'autre extrémité desdits bras intermédiaires (3B) étant solidaire des premiers bras (3, 3A) au niveau d'un élément de jonction mécanique (20, 20A).

8. Dispositif pour la détection d'un rayonnement électromagnétique selon la revendication 7, ***caractérisé* en ce que** lesdites traverses (4B) d'une même membrane (2) sont solidarisées entre elles au moyen d'un élément rigide ou barreau (30), solidaire et coplanaire de la membrane.

9. Dispositif pour la détection d'un rayonnement électromagnétique selon la revendication 7, ***caractérisé* en ce que** la membrane (2) comporte un cadre rigide continu, deux côtés opposés dudit cadre présentant des extensions formant traverses (4B), aptes à permettre la solidarisation à ce niveau des bras intermédiaires (3B).

10. Dispositif pour la détection d'un rayonnement électromagnétique selon la revendication 6, ***caractérisé* en ce que** lesdites traverses (4B) ne sont pas solidarisées directement sur la membrane (2), mais par l'intermédiaire d'un troisième jeu de deux bras colinéaires (3C), parallèles auxdits premiers bras (3,3A) et auxdits bras intermédiaires (3B), et dont l'une des extrémités est solidarisée aux dites traverses et dont l'autre extrémité est solidaire de ladite membrane au niveau d'un élément de jonction mécanique (20B).

11. Dispositif pour la détection d'un rayonnement électromagnétique selon l'une des revendications 1 à 10, ***caractérisé* en ce que** la largeur des traverses (4A, 4B) est négligeable devant la longueur du bras auquel elles sont solidarisées.

12. Dispositif pour la détection d'un rayonnement électromagnétique selon l'une des revendications 1 à 10, ***caractérisé* en ce que** la largeur de la traverse (4A, 4B) est, au moins à l'extrémité en jonction avec le bras, de l'ordre de celle du bras.

13. Dispositif pour la détection d'un rayonnement électromagnétique selon l'une des revendications 7 à 12, ***caractérisé* en ce que** les matériaux constitutifs des bras se prolongent sur l'intérieur de la membrane ou sur l'emprise de la traverse (4B) solidaire de la membrane, de manière à procurer une connectivité électrique aisée à réaliser lorsqu'elle est nécessaire, et de manière à former une solidarité mécanique adéquate entre l'extrémité des bras et les structures qui les maintiennent linéairement tendus.

## Patentansprüche

1. Vorrichtung zur Detektion von elektromagnetischer Strahlung, insbesondere von Infrarotstrahlung, mit einem Substrat (1) und mindestens einer Mikrostruktur mit einer Membran (2), die gegenüber der Strahlung empfindlich ist und sich im Wesentlichen gegenüber dem Substrat (1) und hiervon beabstandet erstreckt, wobei die Membran (2) mechanisch mit zwei Halteelementen oder Stützarmen (3; 3A) verbunden ist, die länglich, kollinear, im Wesentlichen koplanar mit der Membran (2) sind und auf ein und derselben Seite der Membran (2) angeordnet sind, wobei der jeweilige Arm mechanisch mit dem Substrat (1) über eine mit dem Substrat (1) verbundene Stütze (15) verbunden ist, wobei die Membran (2) in elektrischer Verbindung mit dem Substrat (1) ist, **dadurch gekennzeichnet, dass**
- die zwei kolinearen Arme (3, 3A) bzw. "ersten Arme" miteinander an ihren Enden verbunden sind, wobei die kollinearen Arme mit der Membran (2) mittels eines Elements für eine mechanische Verbindung (20, 20A, 20B) verbunden sind, das im Wesentlichen koplanar mit den Armen (3; 3A) und der Membran (2) ist,
- das andere Ende des jeweiligen Arms (1) mit einem steifen, länglichen Steg (4A) verbunden ist, der im Wesentlichen koplanar mit den Armen (3; 3A) ist und sich im Wesentlichen senkrecht zu der Hauptabmessung der Arme (3; 3A) erstreckt, wobei der Steg (4A) einen Vorsprung bildet, der mit der Stütze (15) verbunden ist, mit der der Arm mechanisch verbunden ist.

2. Vorrichtung zur Detektion von elektromagnetischer Strahlung nach Anspruch 1, **dadurch gekennzeichnet, dass** die ersten Arme (3) direkt mit der Membran (2) verbunden sind, wobei ferner mindestens der eine Arm in elektrischer Verbindung mit der Membran und mit dem Steg (4A) ist, der wiederum in elektrischer Verbindung mit der Stütze (15) ist.

3. Vorrichtung zur Detektion von elektromagnetischer Strahlung nach einem der Ansprüche 1 und 2, **dadurch gekennzeichnet, dass** ein steifer Steg (4A) zwei oder vier aneinander grenzenden Membranen (2) gemeinsam ist.

4. Vorrichtung zur Detektion von elektromagnetischer Strahlung nach einem der Ansprüche 1 und 2, **dadurch gekennzeichnet, dass** ein steifer Steg (4A) mit zwei Stützen (15) verbunden ist, die an seinen Enden angeordnet sind.

5. Vorrichtung zur Detektion von elektromagnetischer Strahlung nach einem der Ansprüche 1 bis 4, **dadurch gekennzeichnet, dass** der Steg (4A) durch mindestens eine Schicht aus einem steifen Material gebildet ist, die mit den die Arme bildenden Schichten in integralem Kontakt ist.

6. Vorrichtung zur Detektion von elektromagnetischer Strahlung nach einem der Ansprüche 1 bis 5, **dadurch gekennzeichnet, dass** der Steg (4A) in elektrischer Verbindung mit einer Stütze (15) ist, die wiederum leitend ist, so dass die elektrische Verbindung zwischen den an der Oberfläche des Substrats (1) angeordneten Kontakten und den in der Membran (2) befindlichen elektrischen Funktionen insgesamt sichergestellt ist.

7. Vorrichtung zur Detektion von elektromagnetischer Strahlung nach Anspruch 1, **dadurch gekennzeichnet, dass** die ersten Arme (3, 3A) mit der Membran (2) mittelbar mittels kolinearer Zwischenarme (3B) verbunden sind, die parallel zu den Armen (3, 3A) verlaufen und an einem ihrer Enden mit einem Steg (4B) verbunden sind, der mit der Membran (2) verbunden ist und im Wesentlichen koplanar mit dem Arm und mit der Membran (2) ist, wobei das andere Ende der Zwischenarme (3B) mit den ersten Armen (3, 3A) an einem Element für eine mechanische Verbindung (20, 20A) verbunden ist.

8. Vorrichtung zur Detektion von elektromagnetischer Strahlung nach Anspruch 7, **dadurch gekennzeichnet, dass** die Stege (4B) ein und derselben Membran (2) miteinander verbunden sind mittels eines steifen Elements bzw. eines Stabs (30), das bzw. der mit der Membran verbunden und koplanar ist.

9. Vorrichtung zur Detektion von elektromagnetischer Strahlung nach Anspruch 7, **dadurch gekennzeichnet, dass** die Membran (2) einen durchgehenden steifen Rahmen aufweist, wobei zwei entgegengesetzte Seiten des Rahmens Verlängerungen aufweisen, die Stege (4B) bilden, welche geeignet sind, die Verbindung der Zwischenarme (3B) daran zu ermöglichen.

10. Vorrichtung zur Detektion von elektromagnetischer Strahlung nach Anspruch 6, **dadurch gekennzeichnet, dass** die Stege (4B) nicht unmittelbar über die Membran (2) verbunden sind, sondern über einen dritten Satz zweier kolinearer Arme (3C), die parallel zu den ersten Armen (3, 3A) und zu den Zwischenarmen (3B) verlaufen und bei denen eines der Enden mit den Stegen (4B) verbunden ist und das andere Ende mit der Membran (2) an einem Element für eine mechanische Verbindung (20B) verbunden ist.

11. Vorrichtung zur Detektion von elektromagnetischer Strahlung nach einem der Ansprüche 1 bis 10, **dadurch gekennzeichnet, dass** die Breite der Stege (4A, 4B) gegenüber der Länge des Arms (3), mit dem sie verbunden sind, vernachlässigbar ist.

12. Vorrichtung zur Detektion von elektromagnetischer Strahlung nach einem der Ansprüche 1 bis 10, **dadurch gekennzeichnet, dass** die Breite des Stegs (4A, 4B) zumindest an dem mit dem Arm (3) verbundenen Ende in der Größenordnung derjenigen des Arms liegt.

13. Vorrichtung zur Detektion von elektromagnetischer Strahlung nach einem der Ansprüche 7 bis 12, **dadurch gekennzeichnet, dass** die Materialien, aus denen die Arme bestehen, sich im Inneren der Membran (2) oder in dem Bereich des Stegs (4B), der mit der Membran verbunden ist, so fortsetzen, dass eine erforderlichenfalls einfach herzustellende elektrische Konnektivität bereitgestellt wird und dass eine geeignete mechanische Verbindung zwischen dem Ende der Arme (3, 3A) und den sie linear gespannt haltenden Strukturen hergestellt wird.

## Claims

1. Device for detecting electromagnetic radiation, especially infrared radiation, comprising a substrate (1) and at least one microstructure comprising a membrane (2) which is sensitive to said radiation and extends substantially opposite and away from said substrate, said membrane being mechanically attached to two longilinear, collinear retention elements or support legs (3, 3A), essentially coplanar with the membrane (2) and extending along a same side of the membrane (2), each of the legs being mechanically connected to the substrate (1) by an intermediate post (15), attached to he substrate (1), said membrane also being in electrical continuity with the substrate, ***characterized* :**
• **in that** the two collinear legs (3, 3A), referred to as "first legs", are attached to each other at the level of their ends which are attached to the membrane (2) by means of a mechanical connector (20, 20A, 20B) which is essentially co-planar with the legs (3, 3A) and the membrane (2) ;
• and **in that** the other end of each of said legs is integral with a rigid cross piece (4A) of elongated shape which is substantially co-planar with the legs (3, 3A) and extends substantially at right angles relative to the main dimension of said legs (3, 3A), said cross piece (4A) forming a projection integral with post (15) to which the leg is mechanically connected.

2. Device for detecting electromagnetic radiation as claimed in claim 1, ***characterized* in that** said first legs (3) are directly attached to the membrane (2), at least one of them also being in electrical continuity with said membrane and with cross piece (4A) which is itself in electrical continuity with post (15).

3. Device for detecting electromagnetic radiation as claimed in either claim 1 or 2, ***characterized* in that** a rigid cross piece (4A) is common to two or four adjacent membranes (2).

4. Device for detecting electromagnetic radiation as claimed in either claim 1 or 2, ***characterized* in that** a rigid cross piece (4A) is integral with two posts (15) located at its ends.

5. Device for detecting electromagnetic radiation as claimed in any of claims 1 to 4, ***characterized* in that** the cross piece (4A) is formed by at least one layer of a rigid material which is in full contact with the constituent layers of the legs.

6. Device for detecting electromagnetic radiation as claimed in any of claims 1 to 5, ***characterized* in that** the cross piece (4A) is in electrical continuity with post (15) which is itself conductive so as to ensure overall electrical continuity between the contacts on the surface of the substrate and the electrical functions in the membrane.

7. Device for detecting electromagnetic radiation as claimed in claim 1, ***characterized* in that** said first legs (3, 3A) are indirectly attached to the membrane (2) by means of collinear intermediate legs (3B) which are parallel to legs (3, 3A) and attached at the level of one of their ends to a cross piece (4B) which is integral with the membrane and substantially co-planar with the leg and said membrane, the other end of said intermediate legs (3B) being attached to first legs (3, 3A) at the level of a mechanical connector element (20, 20A).

8. Device for detecting electromagnetic radiation as claimed in claim 7, ***characterized* in that** said the cross pieces (4B) of a single membrane (2) are attached to each other by means of a rigid element or bar (30) which is integral and co-planar with the membrane.

9. Device for detecting electromagnetic radiation as claimed in claim 7, ***characterized* in that** the membrane (2) comprises a continuous rigid frame with two opposite sides of said frame having extensions that form cross pieces (4B) capable of allowing attachment of intermediate arms (3B) at this level.

10. Device for detecting electromagnetic radiation as claimed in claim 7, ***characterized* in that** said cross pieces (4B) are not directly attached to membrane (2) but are connected via a third set of two collinear legs (3C) which are parallel to said first legs (3, 3A) and to said intermediate legs (3B), one of the ends of which is attached to said cross pieces and the other end of which is integral with said membrane at the level of a mechanical connector element (20B).

11. Device for detecting electromagnetic radiation as claimed in any of claims 1 to *10,* ***characterized* in that** the width of cross pieces (4A, 4B) is negligible compared with the length of the leg to which they are attached.

12. Device for detecting electromagnetic radiation as claimed in any of claims 1 to 10, ***characterized* in that** the width of cross piece (4A, 4B) is, at least at the end which is joined to the leg, of the same order as that of the leg.

13. Device for detecting electromagnetic radiation as claimed in any of claims 7 to 12, ***characterized* in that** the constituent materials of the legs extend as far as inside the membrane or over the footprint of cross piece (4B) which is integral with the membrane so as to provide electrical connectivity which is easy to realize when necessary and so as to provide adequate mechanical strength between the end of the legs and the structures which keep them linearly tensioned.
